# EUROPEAN PATENT APPLICATION

(11) **EP 4 681 566 A1**
(43) Date of publication of application: **21.01.2026**
(21) Application number: 23930417.3
(22) Date of filing: 29.03.2023
(51) Int. Cl.: A24F 40/51

(54) **AEROSOL GENERATION SYSTEM**

(71) Applicant: Japan Tobacco Inc., Tokyo 105-6927 (JP)
(72) Inventor: ICHINOSE, Atsushi, Tokyo 130-8603 (JP)
(74) Representative: Hoffmann Eitle
(86) International application number: PCT/JP2023/012805
(87) International publication number: WO 2024/201777

(57) **Abstract**

PROBLEM: To provide an arrangement enabling a battery to operate at a more suitable temperature.

SOLUTION: An aerosol-generating system comprising: a first accommodating portion accommodating a substrate containing an aerosol source; a load for generating energy for heating the aerosol source contained in the substrate accommodated in the first accommodating portion; a second accommodating portion accommodating a battery for supplying power to the load; a temperature sensor which is arranged in the second accommodating portion and measures a temperature of the battery accommodated in the second accommodating portion; and a control unit for controlling operation of the load based on the temperature detected by the temperature sensor, wherein the second accommodating portion has a second opening and insertably/removably accommodates the battery in such a way that the battery is inserted in a third direction and removed in a fourth direction through the second opening, and the temperature sensor is arranged on an inner wall of the second accommodating portion on the third direction side or the fourth direction side.

## Description

### TECHNICAL FIELD

The present disclosure relates to an aerosol-generating system.

### BACKGROUND ART

Inhalation devices that generate substances to be inhaled by users, such as electronic cigarettes, nebulizers and heated tobacco, are in widespread use. For example, an inhalation device employs an aerosol source for generating an aerosol, and a substrate including a flavor source or the like for imparting a flavor component to the generated aerosol, to generate an aerosol to which the flavor component has been imparted. The user can enjoy the flavor by inhaling the aerosol to which the flavor component has been imparted, generated by the inhalation device. The action by which the user inhales the aerosol will also be referred to below as "puffing" or a "puffing action".

In recent years, it has been considered desirable to make the batteries of inhalation devices replaceable for the purposes of consumer protection and reduction of environmental burden. In this regard, PTL 1 below discloses an inhalation device in which the battery can be replaced by removing a cover provided on a side face of the inhalation device.

### CITATION LIST

### PATENT LITERATURE

PTL 1: CN 107373765 A

### SUMMARY OF INVENTION

### TECHNICAL PROBLEM

However, the temperature of the battery was not sufficiently investigated in PTL 1. Various difficulties such as faults are more likely to arise the higher the battery temperature.

Accordingly, the present disclosure takes account of the abovementioned problem, and the objective of the present disclosure lies in providing an arrangement enabling a battery to operate at a more suitable temperature.

### SOLUTION TO PROBLEM

In order to solve the problem above, one aspect of the present invention provides: an aerosol-generating system comprising: a first accommodating portion accommodating a substrate containing an aerosol source; a load for generating energy for heating the aerosol source contained in the substrate accommodated in the first accommodating portion; a second accommodating portion accommodating a battery for supplying power to the load; a temperature sensor which is arranged in the second accommodating portion and measures a temperature of the battery accommodated in the second accommodating portion; and a control unit for controlling operation of the load based on the temperature detected by the temperature sensor, wherein the first accommodating portion has a first opening and insertably/removably accommodates the substrate in such a way that the substrate is inserted in a first direction and removed in a second direction through the first opening, the second accommodating portion has a second opening and insertably/removably accommodates the battery in such a way that the battery is inserted in a third direction and removed in a fourth direction through the second opening, and the temperature sensor is arranged on an inner wall of the second accommodating portion on the third direction side or the fourth direction side.

The temperature sensor may be arranged in proximity to a part of a surface of the battery which is expected to reach the highest temperature during operation of the load.

The temperature sensor may be arranged in proximity to the surface of the battery on a side which is closer to the load than the center of the battery.

The control unit may estimate the highest temperature of the battery based on the temperature detected by the temperature sensor, and may control operation of the load based on the estimated highest temperature of the battery.

The aerosol-generating system may comprise a plurality of the temperature sensors, and the control unit may control operation of the load based on the highest temperature among the temperatures detected by the plurality of temperature sensors.

The second accommodating portion may further comprise a cover portion for opening/closing the second opening, and the cover portion may open/close the second opening by being attached/detached or by pivoting.

The aerosol-generating system may further comprise an opening/closing sensor for detecting opening/closing of the second opening by the cover portion, and the control unit may control operation of the load based on a detection result from the opening/closing sensor.

The control unit may control charging of the battery based on the detection result from the opening/closing sensor.

The aerosol-generating system may comprise a terminal electrically connected to the battery, the control unit may be arranged further to the second direction side than the second accommodating portion, and the terminal may be arranged at a position on the inner wall of the second accommodating portion on the second direction side, offset from the load in the third direction or the fourth direction.

The aerosol-generating system may comprise a terminal electrically connected to the battery, and the terminal may be configured as an elastic element.

The aerosol-generating system may further comprise: a first through-hole enabling communication between an internal space of the first accommodating portion and an internal space of the second accommodating portion; and a second through-hole enabling the internal space of the second accommodating portion to communicate with the outside.

The aerosol-generating system may further comprise a charging terminal for receiving power for charging the battery, supplied from an external power source, and the charging terminal may be arranged further to the second direction side than the second accommodating portion.

The first direction and the second direction, and the third direction and the fourth direction may be orthogonal or substantially orthogonal.

The aerosol-generating system may further comprise the battery.

The aerosol-generating system may further comprise the substrate.

### ADVANTAGEOUS EFFECTS OF INVENTION

The present disclosure as described above provides an arrangement enabling a battery to operate at a more suitable temperature.

### BRIEF DESCRIPTION OF DRAWINGS

Fig. 1 is a schematic diagram schematically showing a configuration example of an inhalation device.
Fig. 2 is an oblique view showing an example of the external configuration of the inhalation device according to the embodiment.
Fig. 3 schematically shows the internal configuration of the inhalation device according to the embodiment.
Fig. 4 schematically shows the internal configuration of the inhalation device according to the embodiment.
Fig. 5 is a diagram to illustrate a first variant example.
Fig. 6 is a diagram to illustrate a second variant example.
Fig. 7 is a diagram to illustrate a third variant example.
Fig. 8 is a diagram to illustrate an example of an air flow path in the inhalation device.
Fig. 9 is a diagram to illustrate another example of an air flow path in the inhalation device.
Fig. 10 is a diagram to illustrate another example of an air flow path in the inhalation device.

### DESCRIPTION OF EMBODIMENTS

Preferred embodiments of the present disclosure will be described in detail below with reference to the appended drawings. It should be noted that components having substantially the same functional configuration will be assigned the same reference numbers in the description and drawings to avoid giving a duplicate description.

In this description and the drawings, elements having substantially the same functional configuration may also be distinguished by using the same code followed by an index comprising different alphabetic or numeric characters. For example, a plurality of elements having substantially the same functional configuration are distinguished, as necessary, as devices 1-1, 1-2, and 1-3. However, if there is no need to specifically distinguish between each of the plurality of elements having substantially the same functional configuration, only the same reference sign is assigned. For example, devices 1-1, 1-2, and 1-3 are also simply referred to as device(s) 1 when there is no particular need to distinguish between devices 1-1, 1-2, and 1-3.

### 1. Basic configuration example

An inhalation device is a device for generating a substance to be inhaled by a user. Hereinafter, the substance generated by the inhalation device will be described as being an aerosol. Additionally, the substance generated by the inhalation device may be a gas.

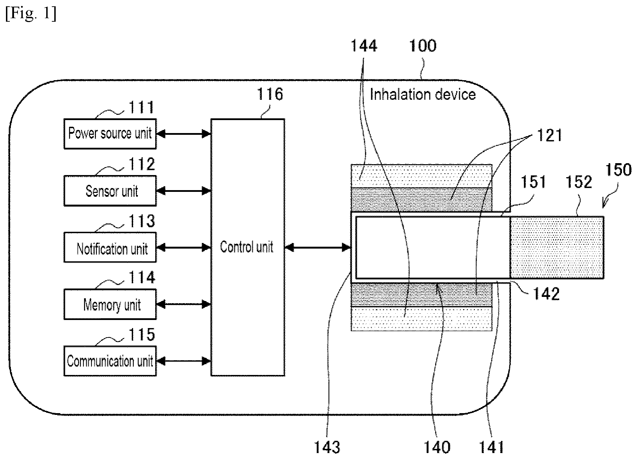

Fig. 1 is a schematic diagram schematically showing a configuration example of an inhalation device. As shown in fig. 1, an inhalation device 100 according to this configuration example comprises: a power source unit 111, a sensor unit 112, a notification unit 113, a memory unit 114, a communication unit 115, a control unit 116, a heating unit 121, an accommodating portion 140, and a heat insulating portion 144.

The power source unit 111 stores electrical power. The power source unit 111 then supplies the electrical power to each component of the inhalation device 100 in accordance with control performed by the control unit 116. The power source unit 111 may be configured by a rechargeable battery such as a lithium ion secondary battery, for example.

The sensor unit 112 acquires various types of information relating to the inhalation device 100. As an example, the sensor unit 112 is configured by a pressure sensor such as a capacitor microphone, a flow rate sensor or a temperature sensor, etc., and acquires values associated with inhalation by a user. As another example, the sensor unit 112 is configured by an input device, such as a button or switch, for accepting input of information from the user.

The notification unit 113 notifies the user of information. The notification unit 113 is configured by a light-emitting device which emits light, a display device which displays images, a sound output device which outputs sound, or a vibrating device which vibrates, etc., for example.

The memory unit 114 stores various types of information for the operation of the inhalation device 100. The memory unit 114 is configured by a non-volatile storage medium such as a flash memory, for example.

The communication unit 115 is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116 functions as an arithmetic processing device and a control device, and controls overall operation within the inhalation device 100 in accordance with various programs. The control unit 116 is realized by a CPU (central processing unit) or an electronic circuit such as a microprocessor, for example.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines the columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100 is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path, which is not illustrated in the drawings, and reaches the inside of the user's mouth together with the aerosol generated from the substrate portion 151.

The heating unit 121 heats the aerosol source to atomize the aerosol source, thereby generating the aerosol. In the example shown in fig. 1, the heating unit 121 has a film-like form and is arranged so as to cover the outer circumference of the accommodating portion 140. Then, when the heating unit 121 generates heat, the substrate portion 151 of the stick-type substrate 150 is heated from the outer circumference and an aerosol is generated. The heating unit 121 generates heat when supplied with electricity from the power source unit 111. By way of example, electricity may be supplied when the sensor unit 112 detects that the user has started inhaling and/or that predetermined information has been input. The supply of electricity may then be stopped when the sensor unit 112 detects that the user has finished inhaling and/or that predetermined information has been input.

The heat insulating portion 144 prevents heat transfer from the heating unit 121 to other components. For example, the heat insulating portion 144 is configured from a vacuum heat insulating material or an aerogel heat insulating material, or the like.

A configuration example of the inhalation device 100 has been described above. The inhalation device 100 is, of course, not limited to the configuration described above, and may adopt various configurations, such as those illustrated below by way of example.

As one example, the heating unit 121 may have a blade-like form and may be arranged so as to protrude into the internal space 141 from the bottom portion 143 of the accommodating portion 140. In that case, the blade-like heating unit 121 is inserted into the substrate portion 151 of the stick-type substrate 150 and heats the substrate portion 151 of the stick-type substrate 150 from the inside. As another example, the heating unit 121 may be arranged so as to cover the bottom portion 143 of the accommodating portion 140. Furthermore, the heating unit 121 may be configured by a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may comprise an opening/closing mechanism such as a hinge for opening/closing part of a casing that forms the internal space 141. By opening/closing the casing, the accommodating portion 140 may then receive and grip the stick-type substrate 150 that has been inserted into the internal space 141. In that case, the heating unit 121 may be provided on the part of the accommodating portion 140 gripping the stick-type substrate 150, and may heat the stick-type substrate 150 while pressing same.

Furthermore, the means for atomizing the aerosol source is not limited to heating provided by the heating unit 121. For example, the means for atomizing the aerosol source may be induction heating. In that case, the inhalation device 100 comprises at least an electromagnetic induction source such as a coil for generating a magnetic field, instead of the heating unit 121. A susceptor which generates heat by means of induction heating may be provided in the inhalation device 100, or may be contained in the stick-type substrate 150.

### 2. Detailed configuration example

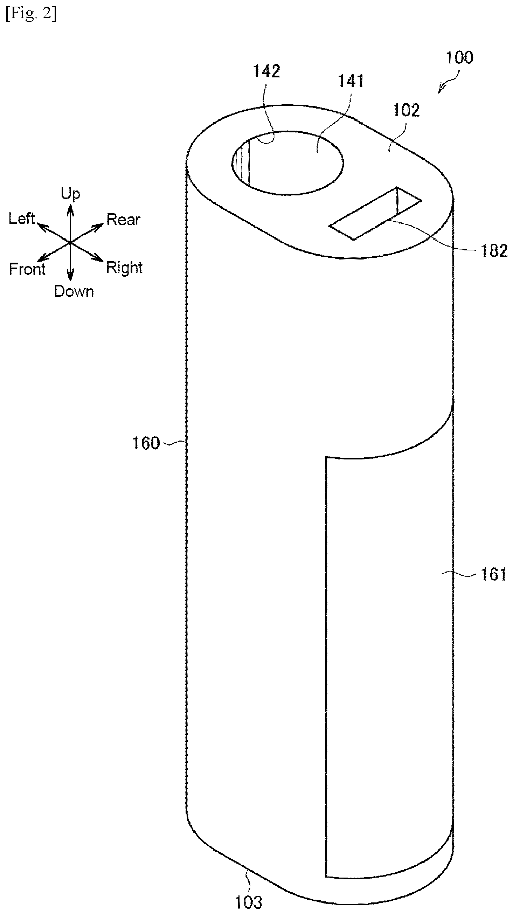

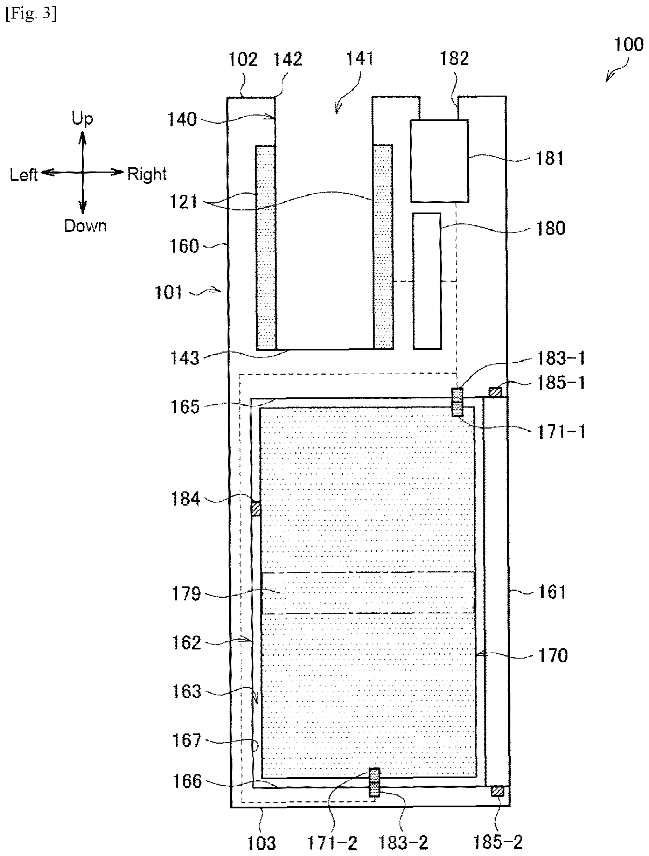

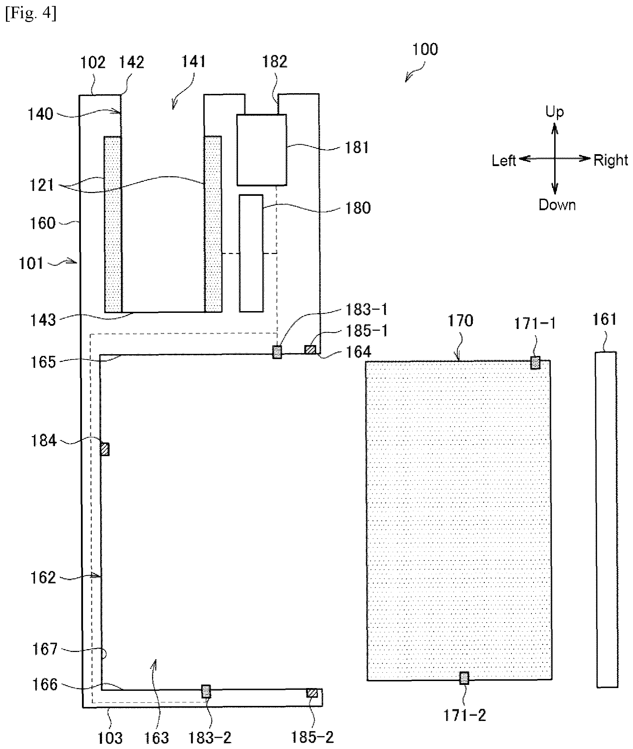

A detailed configuration example of the inhalation device 100 according to the embodiment will be described with reference to fig. 2-4. Fig. 2 is an oblique view showing an example of the external configuration of the inhalation device 100 according to the embodiment. Fig. 3 and 4 schematically show the internal configuration of the inhalation device 100 according to the embodiment.

As shown in fig. 2, the inhalation device 100 may be configured as a straight columnar element with a top face 102 and a bottom face 103 having an oval-shaped cross section. The inhalation device 100 is sized so that it can be gripped by a user, and used while being gripped by the user. It should be noted that a user interface such as a button for inputting operating instructions to the inhalation device 100, or a display for displaying an operating state of the inhalation device 100 may be provided on the surface of the inhalation device 100, although this is not shown in fig. 2.

In this embodiment, a direction of insertion/removal of the stick-type substrate 150 into/from the accommodating portion 140 will also be referred to below as the vertical direction. The vertical direction corresponds to a longitudinal direction of the inhalation device 100. Furthermore, a longitudinal direction in a cross section of the inhalation device 100 will also be referred to as a lateral direction, and a short-side direction in said cross section will also be referred to as a front-rear direction.

As shown in fig. 2-4, the inhalation device 100 comprises: a housing 160, a cover portion 161, a battery compartment 162, a control circuit 180, a charging circuit 181, a charging terminal 182, a battery terminal 183 (183-1 and 183-2), a temperature sensor 184, and an opening/closing sensor 185 (185-1 and 185-2). A battery pack 170 is then removably fitted in the inhalation device 100. The control circuit 180 and the charging circuit 181 correspond to the control unit 116 shown in fig. 1. The battery pack 170 corresponds to the power source unit 111 shown in fig. 1. The temperature sensor 184 and the opening/closing sensor 185 correspond to the sensor unit 112 shown in fig. 1.

The housing 160 constitutes the outermost casing of the inhalation device 100. As shown in fig. 2-4, the opening 142 is provided in a top face 102 of the housing 160. The stick-type substrate 150 is then inserted into and removed from the accommodating portion 140 through the opening 142.

The accommodating portion 140 is an example of a first accommodating portion for accommodating the stick-type substrate 150. The accommodating portion 140 insertably/removably accommodates the stick-type substrate 150 in such a way that the stick-type substrate 150 is inserted in a downward direction and removed in an upward direction through the opening 142 (which is an example of the first opening). The downward direction is an example of a first direction, which is a direction of insertion of the stick-type substrate 150. The upward direction is an example of a second direction, which is a direction of removal of the stick-type substrate 150.

The battery compartment 162 is an example of a second accommodating portion accommodating the battery pack 170. More specifically, the battery compartment 162 has an internal space 163 and accommodates the battery pack 170 in the internal space 163.

The battery compartment 162 has an opening 164 (which is an example of a second opening) enabling the internal space 163 to communicate with the outside. The battery pack 170 is then inserted into and removed from the battery compartment 162 through the opening 164. More specifically, the battery compartment 162 insertably/removably accommodates the battery pack 170 in such a way that the battery pack 170 is inserted in a left direction and removed in a right direction through the opening 164. The left direction is an example of a third direction, which is a direction of insertion of the battery pack 170. The right direction is an example of a fourth direction, which is a direction of removal of the battery pack 170.

The battery compartment 162 has a cover portion 161 for opening/closing the opening 164. The cover portion 161 may open/close the opening 164 by being attached/detached. Fig. 3 shows a state in which the cover portion 161 has closed the opening 164, and the battery pack 170 is accommodated in the battery compartment 162. Meanwhile, fig. 4 shows a state in which the cover portion 161 has opened the opening 164, and the battery pack 170 has been removed from the battery compartment 162.

The battery compartment 162 should be formed with a shape that circumscribes the battery pack 170. As an example, the battery pack 170 is preferably configured with a shape that is not easy to rotate about the vertical direction when accommodated in the battery compartment 162, such as an elliptical cylinder shape or a prism shape. By virtue of this configuration, rotation of the battery pack 170 inside the battery compartment 162 is restricted so that a connection between the battery terminal 183 and an electrode 171 (to be described later) can be easily maintained. The battery pack 170 will be assumed to have a prism shape below. The battery compartment 162 then defines a cuboid internal space 163.

The battery pack 170 is a rechargeable battery configured to be removable from the inhalation device 100. A portion of the inhalation device 100 excluding the battery pack 170 will also be referred to as a main body 101. The battery pack 170 supplies power to the heating unit 121 and other components accommodated in the main body 101. The battery pack 170 comprises a plurality of electrodes 171 (171-1 and 171-2). As an example, the electrode 171-1 is a positive electrode, and the electrode 171-2 is a negative electrode. The temperature of the battery pack 170 may rise during charging/discharging, or because of heat transfer from the heating unit 121.

As shown in fig. 3 and 4, the main body 101 of the inhalation device 100 comprises a plurality of battery terminals 183 (183-1 and 183-2). The battery terminals 183 are electrically connected to the battery pack 170. That is to say, the battery terminals 183 constitute a power interface between the battery pack 170 and components of the inhalation device 100 inside the main body 101. As shown in fig. 3 and 4, the battery terminals 183 are connected by way of conducting wires, denoted by broken lines, to the heating unit 121 and the charging circuit 181, and power is sent/received therebetween. Fig. 3 and 4 do not show electrical connections with other components.

As shown in fig. 3 and 4, the plurality of battery terminals 183 are respectively detachably connected to each of the plurality of electrodes 171 of the battery pack 170. For example, while the battery pack 170 is accommodated in the battery compartment 162, the battery terminal 183-1 is connected to the electrode 171-1, and the battery terminal 183-2 is connected to the electrode 171-2. More specifically, the battery terminal 183-1 is arranged on an upper-side inner wall 165 of the battery compartment 162, and is connected to the electrode 171-1 arranged on an upper side of the battery pack 170. Meanwhile, the battery terminal 183-2 is arranged on a lower-side inner wall 166 of the battery compartment 162, and is connected to the electrode 171-2 arranged on a lower side of the battery pack 170. This enables a supply of power from the battery pack 170 to the other components of the inhalation device 100 inside the main body 101. It should be noted that, when the battery pack 170 has been removed from the battery compartment 162, this releases the connections between each of the plurality of battery terminals 183 and each of the plurality of electrodes 171 of the battery pack 170.

The battery terminals 183 may be configured by elastic elements such as a wire spring or a plate spring. The elastic elements serving as the battery terminals 183 are pushed in while contacting the electrodes 171 as the battery pack 170 is being inserted into the battery compartment 162, and demonstrate an elastic force in directions sandwiching the battery pack 170. By virtue of this configuration, the battery terminals 183 and the electrodes 171 can be placed in more secure contact while the battery pack 170 is accommodated in the battery compartment 162. As a result, it is possible to reduce contact resistance at the connections between the battery terminals 183 and the electrodes 171.

The battery terminals 183 are preferably formed by a heat-resistant metal. Examples of heat-resistant metals that may be cited include phosphor bronze and copper-based alloys such as Corson alloys. This is because copper has lower electrical resistance than aluminum, etc. By virtue of this configuration, it is possible to limit relaxation of the elastic force of the battery terminals 183 associated with an increase in the temperature of the battery terminals 183. This makes it possible to limit an increase in contact resistance at the connections between the battery terminals 183 and the electrodes 171, even if the temperature of the battery terminals 183 rises due to heat transfer from the heating unit 121 or the battery pack 170.

The battery terminals 183 are also preferably gold-plated or similar. This is to prevent rust and to limit contact resistance.

Here, as shown in fig. 3 and 4, the control circuit 180 and the charging circuit 181 are arranged further to the upper side than the battery compartment 162. In this case, the battery terminal 183-1 is preferably arranged at a position on the upper-side inner wall 165 of the battery compartment 162, offset from the heating unit 121 in a lateral direction (or front-rear direction). An offset position as referred to here indicates a spaced-apart position or a non-overlapping position. By virtue of this configuration, it is possible to limit heat transfer from the heating unit 121 to the battery terminal 183-1. As a result, it is possible to limit an increase in contact resistance at the connections between the battery terminals 183 and the electrodes 171 associated with a temperature increase of the battery terminal 183-1. Moreover, the battery terminal 183-1 is preferably arranged directly below the control circuit 180 or the charging circuit 181. By virtue of this configuration, it is possible to minimize a distance between the battery terminal 183-1 and the control circuit 180 and charging circuit 181, therefore making it possible to mitigate power losses in the conducting wires.

The temperature sensor 184 is arranged in the battery compartment 162. The temperature sensor 184 then measures a temperature of the battery pack 170 accommodated in the battery compartment 162. As shown in fig. 3, for example, the temperature sensor 184 abuts the battery pack 170 accommodated in the battery compartment 162 and measures a surface temperature of the battery pack 170. Alternatively, the temperature sensor 184 may indirectly abut the battery pack 170 accommodated in the battery compartment 162 by way of a member having heat transfer properties, and the surface temperature of the battery pack 170 may be measured via the member having heat transfer properties. The temperature sensor 184 may be a thermistor, for example.

As shown in fig. 3 and 4, the temperature sensor 184 is arranged on a left-side inner wall 167, which is an inner wall of the battery compartment 162 on the side in the direction of insertion of the battery pack 170. By virtue of this configuration, the temperature sensor 184 and the battery pack 170 come into contact only when the battery pack 170 is fully inserted. It is therefore possible to prevent friction between the temperature sensor 184 and the battery pack 170 as the battery pack 170 is inserted/removed, limiting misalignment and failure of the temperature sensor 184.

The temperature sensor 184 is arranged in proximity to (e.g., directly or indirectly abutting) a part of the surface of the battery pack 170 which is expected to reach the highest temperature during operation of the heating unit 121. This configuration makes it possible to improve various types of control (to be described later) based on the temperature detected by the temperature sensor 184.

The temperature sensor 184 is preferably arranged in proximity to the surface of the battery pack 170 on the side which is closer to the heating unit 121 than the center of the battery pack 170. As shown in fig. 3, for example, when the battery pack 170 is shaped with the longitudinal direction running in the vertical direction, the temperature sensor 184 is preferably arranged so as to abut the battery pack 170 between the center of the battery pack 170 in the vertical direction and an upper end of the battery pack 170. In terms of the battery pack 170 alone, it is the center portion which reaches the highest temperature, so the part of the surface of the battery pack 170 closest to the center portion, that is, a center section 179 in the vertical direction, is expected to reach the highest temperature on the surface of the battery pack 170. Meanwhile, when the battery pack 170 is accommodated in the battery compartment 162, it is conceivable that the temperature of the battery pack 170 will rise because of heat transfer from the heating unit 121. A section of the surface of the battery pack 170 between the center section 179 in the vertical direction and the upper end is therefore expected to reach the highest temperature on the surface of the battery pack 170. In this regard, the configuration above allows the temperature sensor 184 to detect the surface temperature on the section of the surface of the battery pack 170 which is expected to reach the highest temperature.

It should be noted that it is feasible that the part of the surface of the battery pack 170 which reaches the highest temperature during operation of the heating unit 121 will vary depending on the physical structure of the inhalation device 100, such as the specifications of the heating unit 121 and the battery pack 170. The place on the surface of the battery pack 170 which actually reaches the highest temperature during operation of the heating unit 121 may therefore be established by experimentation using an actual inhalation device 100, and the temperature sensor 184 may be arranged at the position established.

The opening/closing sensor 185 detects opening/closing of the opening 164 by the cover portion 161. For example, the opening/closing sensor 185 may be configured as a proximity sensor of the magnetic detection type, such as a Hall sensor, which may detect opening/closing of the cover portion 161 according to the presence or absence of magnetism corresponding to the cover portion 161. Alternatively, the opening/closing sensor 185 may detect opening/closing of the cover portion 161 according to whether or not an electrical current passes, or whether or not light is detected, etc. Furthermore, the inhalation device 100 may be provided with a physical button which is depressed when the cover portion 161 is attached, and opening/closing of the cover portion 161 may be detected according to the state of pressing of this physical button.

As shown in fig. 3 and 4, the opening/closing sensor 185-1 may be arranged on the part on the upper-side inner wall 165 of the battery compartment 162 where the cover portion 161 is attached/detached. Furthermore, the opening/closing sensor 185-2 may be arranged on the part on the lower-side inner wall 166 of the battery compartment 162 where the cover portion 161 is attached/detached. The control circuit 180 may then determine that the cover portion 161 is closed if both the opening/closing sensor 185-1 and the opening/closing sensor 185-2 detect proximity to the cover portion 161. Meanwhile, the control circuit 180 may determine that the cover portion 161 is open if at least either one of the opening/closing sensor 185-1 and the opening/closing sensor 185-2 detects separation from the cover portion 161.

The control circuit 180 controls power supply from the battery pack 170 to the heating unit 121. In particular, the control circuit 180 may control power supply from the battery pack 170 to the heating unit 121 on the basis of a heating profile. The heating profile is control information for controlling the temperature at which the aerosol source is heated, and is information indicating a time-series transition of a target value of the temperature of the heating unit 121, for example. The control unit 180 controls power supply to the heating unit 121 so that the temperature of the heating unit 121 transitions to the target temperature in the manner defined in the heating profile. The heating profile is typically designed such that, when the user inhales the aerosol generated from the stick-type substrate 150, the flavor tasted by the user is optimized. The flavor tasted by the user can therefore be optimized by controlling operation of the heating unit 121 based on the heating profile.

The temperature control of the heating unit 121 can be realized by known feedback control, for example. The feedback control may be, for example, PID control (Proportional-Integral-Differential Controller). The control unit 116 may cause power from the battery pack 170 to be supplied to the heating unit 121 in the form of pulses by pulse width modulation (PWM) or pulse frequency modulation (PFM). In that case, the control unit 116 can control the temperature of the heating unit 121 by adjusting the duty ratio of the power pulses in the feedback control.

The temperature of the heating unit 121 can be quantified by measuring or estimating the electrical resistance value of the heating unit 121 (a heating resistive element constituting the heating unit 121, to be more precise), for example. This is because the electrical resistance value of the heating resistive element varies with temperature. The electrical resistance value of the heating resistive element can be estimated by measuring the amount of voltage drop at the heating resistive element, for example. The amount of voltage drop at the heating resistive element can be measured by a voltage sensor measuring a potential difference applied to the heating resistive element. In another example, the temperature of the heating unit 121 can be measured by a temperature sensor such as a thermistor installed near the heating unit 121.

The control circuit 180 controls operation of the heating unit 121 based on the temperature detected by the temperature sensor 184. More specifically, the control circuit 180 may control whether or not heating is allowed by the heating unit 121, based on the surface temperature of the battery pack 170 detected by the temperature sensor 184. For example, the control circuit 180 may permit heating by the heating unit 121 when the surface temperature of the battery pack 170 detected by the temperature sensor 184 is equal to or less than a predetermined threshold, and may prohibit heating by the heating unit 121 when said surface temperature exceeds the predetermined threshold. Prohibiting heating in this case means that heating is stopped if heating is in progress, and heating is not performed if heating is not in progress. Alternatively, the control circuit 180 may control a voltage applied to the heating unit 121 based on the surface temperature of the battery pack 170 detected by the temperature sensor 184. For example, the control circuit 180 may apply a lower voltage to the heating unit 121 when the surface temperature of the battery pack 170 detected by the temperature sensor 184 exceeds a predetermined threshold than when said surface temperature is less than the predetermined threshold. The concept of voltage control includes control of the duty ratio, in addition to control of the maximum voltage. This configuration enables the battery pack 170 to operate at a suitable temperature. As a result, it is possible to suppress various difficulties such as faults associated with an excessive rise in the temperature of the battery pack 170.

The control unit 180 may also estimate the highest temperature of the battery pack 170 based on the temperature detected by the temperature sensor 184, and may control operation of the heating unit 121 based on the estimated highest temperature of the battery pack 170. More specifically, the control circuit 180 may control whether or not heating is allowed by the heating unit 121, or may control the voltage applied to the heating unit 121, based on the estimated highest temperature of the battery pack 170. The highest temperature as referred to here may be the highest temperature in terms of the surface temperature of the battery pack 170. This is because the temperature sensor 184 is not necessarily limited to being capable of detecting the highest surface temperature of the battery pack 170. Alternatively, the highest temperature as referred to here may be the highest temperature in the battery pack 170 as a whole, including not only the surface but also the interior of the battery pack 170. This is because the temperature in the interior of the battery pack 170 may be higher than the temperature on the surface. As an example, the control circuit 180 may estimate the highest temperature of the battery pack 170 by multiplying the temperature detected by the temperature sensor 184 by a constant, or by adding a constant thereto. The constant may be established by experimentation using an actual inhalation device 100. This configuration enables the battery pack 170 to operate at a more suitable temperature.

The control circuit 180 may also control operation of the heating unit 121 based on the detection result from the opening/closing sensor 185. For example, the control unit 180 may permit heating by the heating unit 121 only in a state in which the cover portion 161 is closed. This configuration can improve safety because it can ensure that the user does not directly touch the battery pack 170 which has become hotter along with heating provided by the heating unit 121.

The charging circuit 181 controls charging of the battery pack 170. The charging circuit 181 supplies the battery pack 170 with power supplied from an external power source via the charging terminal 182. Here, the charging circuit 181 controls the voltage and current.

The charging circuit 181 may control charging of the battery pack 170 based on the temperature detected by the temperature sensor 184. More specifically, the charging circuit 181 may control whether or not charging of the battery pack 170 is allowed, based on the surface temperature of the battery pack 170 detected by the temperature sensor 184. For example, the charging circuit 181 may permit charging of the battery pack 170 when the surface temperature of the battery pack 170 detected by the temperature sensor 184 is equal to or less than a predetermined threshold, and may prohibit charging of the battery pack 170 when said surface temperature exceeds the predetermined threshold. Prohibiting charging in this case means that charging is stopped if charging is in progress, and charging is not performed if charging is not in progress. Alternatively, the charging circuit 181 may control the voltage applied to the battery pack 170 based on the surface temperature of the battery pack 170 detected by the temperature sensor 184. For example, the charging circuit 181 may apply a lower voltage to the battery pack 170 when the surface temperature of the battery pack 170 detected by the temperature sensor 184 exceeds a predetermined threshold than when said surface temperature is less than the predetermined threshold. This configuration enables the battery pack 170 to operate at a suitable temperature. As a result, it is possible to suppress various difficulties such as faults associated with an excessive rise in the temperature of the battery pack 170.

The charging circuit 181 may also control charging of the battery pack 170, based on the highest temperature of the battery pack 170 estimated on the basis of the temperature detected by the temperature sensor 184. This configuration enables the battery pack 170 to operate at a more suitable temperature.

The charging circuit 181 may also control charging of the battery pack 170 based on the detection result from the opening/closing sensor 185. For example, the charging circuit 181 may permit charging of the battery pack 170 only in a state in which the cover portion 161 is closed. This configuration can improve safety because it can ensure that the user does not directly touch the battery pack 170 which has become hotter along with charging.

The charging terminal 182 receives power for charging the battery pack 170, supplied from an external power source. More specifically, the charging terminal 182 is an interface between the charging circuit 181 and the external power source for supplying power for charging the battery pack 170 accommodated in the battery compartment 162. As an example, the charging terminal 182 is a USB (universal serial bus) port. A USB cable may then be connected to the charging terminal 182, and power may be supplied to the charging terminal 182 from an outlet via the USB cable.

As shown in fig. 3 and 4, the charging terminal 182 is preferably arranged further to the upper side than the battery compartment 162. In other words, the charging terminal 182 is preferably arranged in the same direction as the accommodating portion 140 as seen from the battery compartment 162, at a position offset from the accommodating portion 140 in the lateral direction (or front-rear direction). The battery pack 170 is typically larger than the accommodating portion 140 in order to ensure a longer run time. In this regard, the battery compartment 162 and the charging terminal 182 being offset in the vertical direction enables the inhalation device 100 to be made narrower and easier to hold than when the charging terminal 182 and the battery compartment 162 are arranged overlapping in the vertical direction. That is to say, the inhalation device 100 can be made more compact.

As shown in fig. 2-4, the charging terminal 182 is preferably provided at a position offset from the heating unit 121 in the lateral direction (or front-rear direction). Specifically, the charging terminal 182 may be provided on the right-hand side of the top face 102 of the housing 160, which is the opposite side to the heating unit 121 provided on the left-hand side. By virtue of this configuration, it is possible to limit heat transfer from the heating unit 121 to the charging terminal 182. As a result, it is possible to prevent damage to the charging terminal 182 associated with a temperature increase of the charging terminal 182.

### 3. Supplementary information

Preferred embodiments of the present disclosure were described in detail above with reference to the appended drawings, but the present disclosure is not limited to those examples. It is obvious that a person having ordinary knowledge in the technical field to which the present disclosure belongs will be able to conceive of a number of variant examples or modified examples within the scope of the technical concept disclosed in the claims, and any such variant examples or modified examples are naturally understood to fall within the technical scope of the present disclosure.

### 1. First variant example

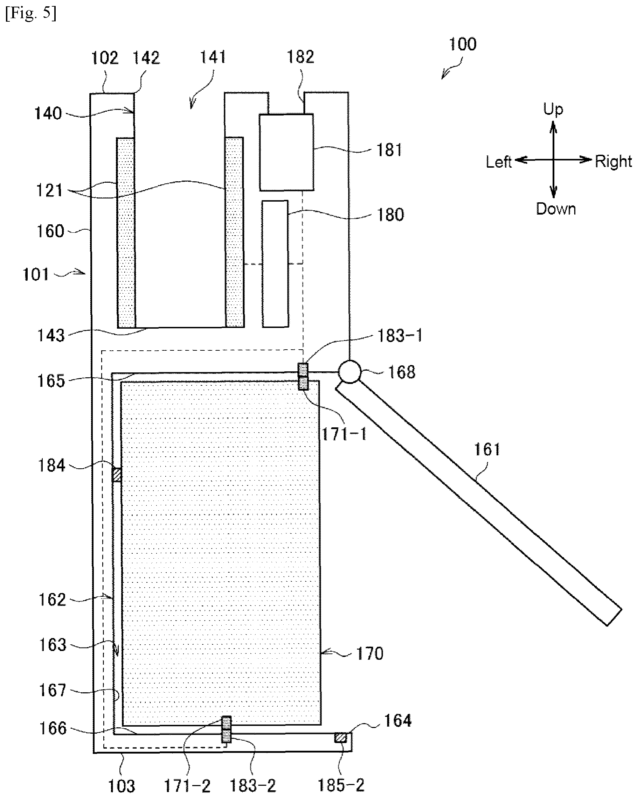

Fig. 5 is a diagram to illustrate a first variant example. As shown in fig. 5, the inhalation device 100 according to this variant example comprises a hinge mechanism 168 for pivoting the cover portion 161. The cover portion 161 may then open/close the opening 164 by pivoting. As shown in fig. 5, when the hinge mechanism 168 is arranged on the upper side, the opening/closing sensor 185-1 may be omitted, and only the opening/closing sensor 185-2 may be provided. The control circuit 180 may then determine that the cover portion 161 is closed if the opening/closing sensor 185-2 detects proximity to the cover portion 161, and may determine that the cover portion 161 is open if the opening/closing sensor 185-2 detects separation from the cover portion 161.

The mechanism by which the cover portion 161 opens/closes the opening 164 is of course not limited to attachment/detachment and pivoting. The cover portion 161 may equally open/close the opening 164 by means of another operation such as sliding.

### 2. Second variant example

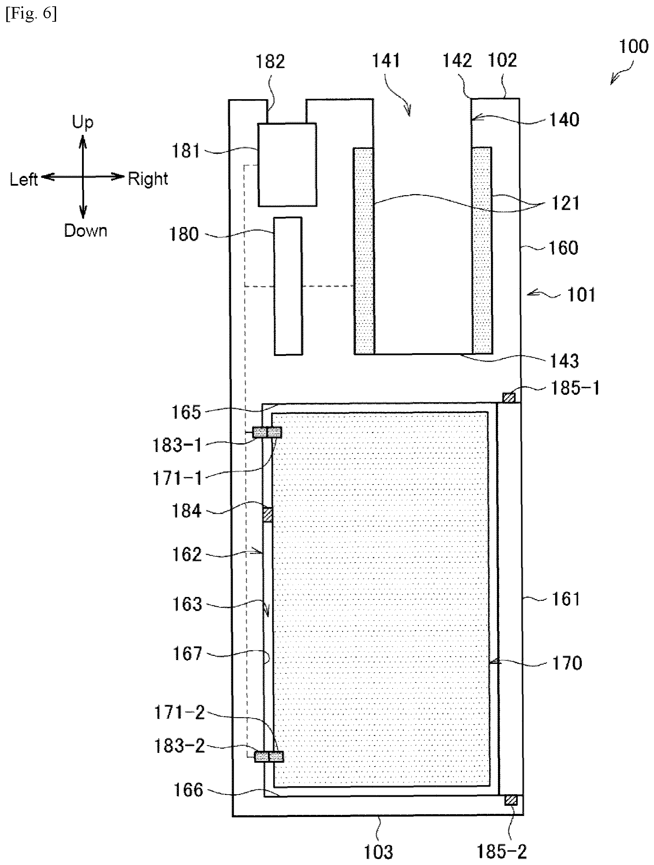

Fig. 6 is a diagram to illustrate a second variant example. As shown in fig. 6, the positions of the control circuit 180, charging circuit 181 and charging terminal 182, and the positions of the accommodating portion 140 and the heating unit 121 may be reversed in the lateral direction as compared to the embodiment described above with reference to fig. 2-4.

Furthermore, as shown in fig. 6, the battery terminal 183-1 may be arranged on the left-side inner wall 167 of the battery compartment 162, and may be connected to the electrode 171-1 of the battery pack 170 arranged to the right. By virtue of this configuration, a distance between the electrode 171-1 and battery terminal 183-1 and the heating unit 121 can be extended as compared to when the battery terminal 183-1 is arranged on the upper-side inner wall 165 of the battery compartment 162. As a result, it is possible to limit heat transfer from the heating unit 121 to the electrode 171-1 and the battery terminal 183-1. Similarly to the battery terminal 183-1, the battery terminal 183-2 may be arranged on the left-side inner wall 167 of the battery compartment 162, and may be connected to the electrode 171-2 of the battery pack 170 arranged to the right. When the battery terminal 183 is arranged on the left-side inner wall 167 of the battery compartment 162, the battery terminal 183 and the battery pack 170 come into contact only when the battery pack 170 is fully inserted. It is therefore possible to prevent friction between the battery terminal 183 and the battery pack 170 as the battery pack 170 is inserted/removed, making it possible to suppress deterioration of the battery terminal 183.

The positions of the components of the inhalation device 100 are not limited to either those of the example shown in fig. 2-4 or the example shown in fig. 6, and may be varied, as appropriate.

### 3. Third variant example

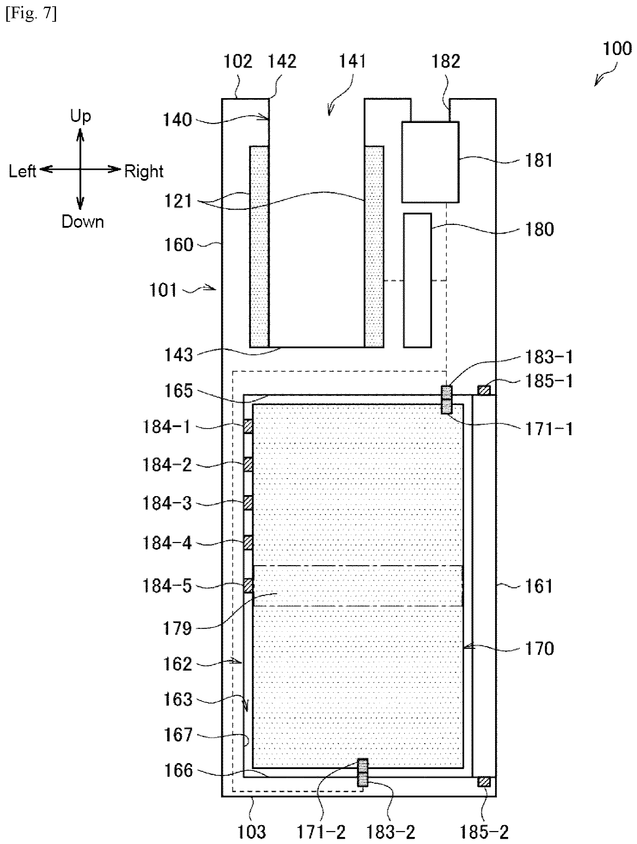

Fig. 7 is a diagram to illustrate a third variant example. As shown in fig. 7, the inhalation device 100 may comprise a plurality of temperature sensors 184 (184-1 to 184-5). In this case, the control circuit 180 may control operation of the heating unit 121 based on the highest temperature among temperatures detected by the plurality of temperature sensors 184. In particular, the plurality of temperature sensors 184 are preferably arranged spaced apart from each other while abutting the battery pack 170 in a range of the surface of the battery pack 170 between the center section 179 in the vertical direction and the upper end. This is because the part of the surface of the battery pack 170 closest to the center portion is considered to lie in this range. However, at least one temperature sensor 184-5 is preferably arranged in the center section 179 in the vertical direction on the surface of the battery pack 170. The charging circuit 181 may of course also control charging of the battery pack 170 based on the highest temperature among the temperatures detected by the plurality of temperature sensors 184. This enables the battery pack 170 to operate at a more suitable temperature.

### 4. Supplementary information relating to air flow path

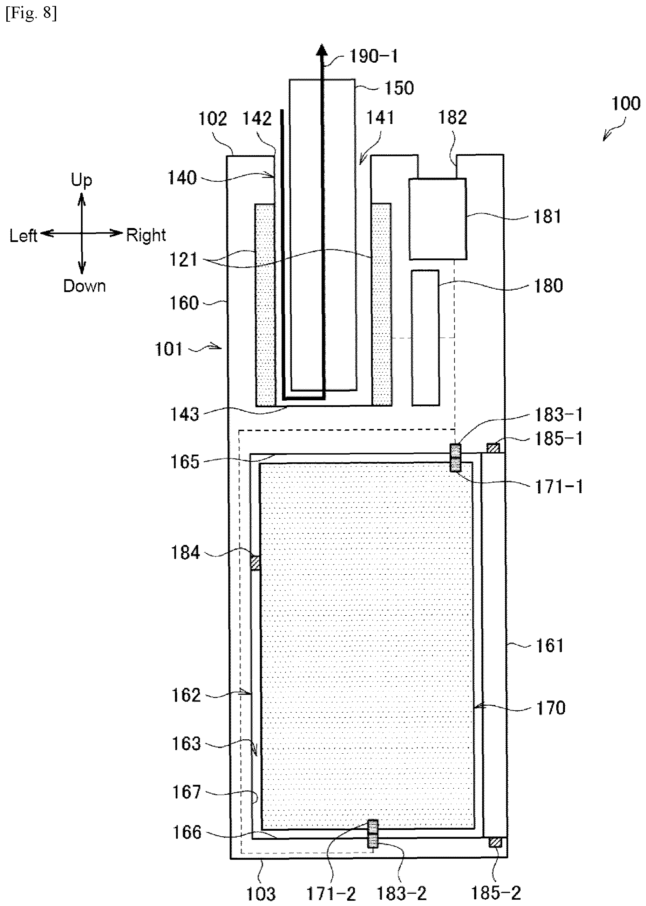

A flow path for air flowing through the inhalation device 100 as the user takes puffs will now be described as a supplement with reference to fig. 8-10.

Fig. 8 is a diagram to illustrate an example of an air flow path in the inhalation device 100. The configuration of the inhalation device 100 shown in fig. 8 is as described with reference to fig. 3 and 4. In the example shown in fig. 8, air flows along an air flow path 190-1 when the user takes a puff with the stick-type substrate 150 held in their mouth. That is to say, the air passes in succession through a gap between the stick-type substrate 150 and the accommodating portion 140, the tip end of the stick-type substrate 150, then passes through the inside of the stick-type substrate 150, reaching the inside of the user's mouth together with the aerosol generated in the stick-type substrate 150. A flow of air such as this is also referred to as a counterflow.

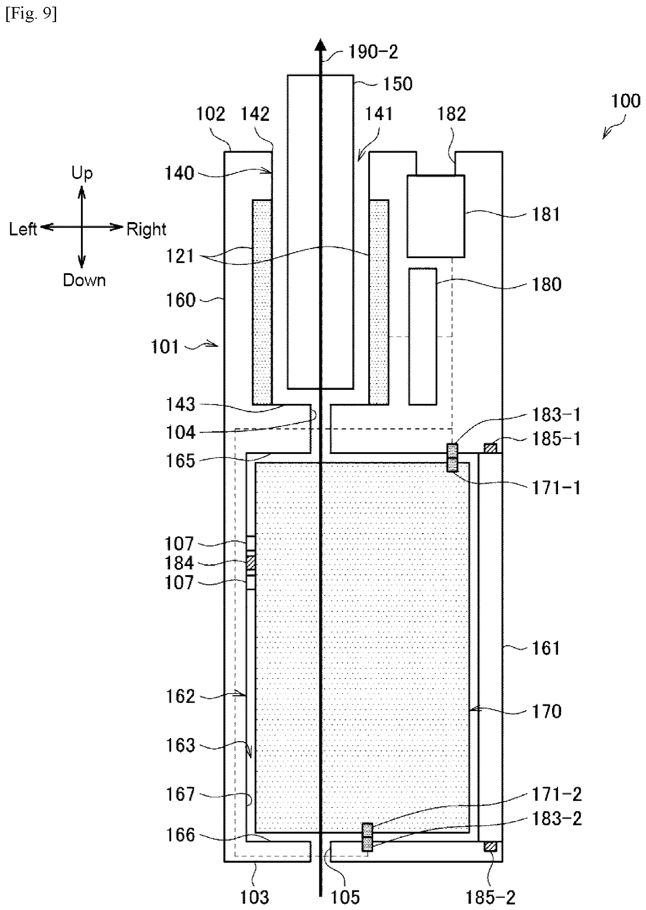

Fig. 9 is a diagram to illustrate another example of an air flow path in the inhalation device 100. The inhalation device 100 shown in fig. 9 is provided with a first through-hole 104, the two ends of which are formed by the bottom portion 143 of the accommodating portion 140 and the upper-side inner wall 165 of the battery compartment 162. The first through-hole 104 enables communication between the internal space 141 of the accommodating portion 140 and the internal space 163 of the battery compartment 162. The inhalation device 100 is further provided with a second through-hole 105, the two ends of which are formed by the lower-side inner wall 166 of the battery compartment 162 and the bottom face 103 of the inhalation device 100. The second through-hole 105 enables the internal space 163 of the battery compartment 162 to communicate with the outside. In the example shown in fig. 9, air then flows along an air flow path 190-2 when the user takes a puff with the stick-type substrate 150 held in their mouth. That is to say, the air passes in succession through the second through-hole 105, a gap between the battery compartment 162 and the battery pack 170, the first through-hole 104, the tip end of the stick-type substrate 150, then passes through the inside of the stick-type substrate 150, reaching the inside of the user's mouth together with the aerosol generated in the stick-type substrate 150. This configuration allows cold external air accompanying puffing to pass through the battery compartment 162, therefore making it possible to cool the battery pack 170 which has become hotter along with heating provided by the heating unit 121.

As shown in fig. 9, however, a partition 107 abutting the battery pack 170 while surrounding the temperature sensor 184 is preferably provided around the temperature sensor 184. This configuration makes it possible to isolate the temperature sensor 184 from the air flow path 190-2 by means of the partition 107. As a result, it is possible to prevent a situation in which the cold external air that has flowed into the battery compartment 162 along with puffing touches the temperature sensor 184, causing an undue drop in the temperature detected by the temperature sensor 184.

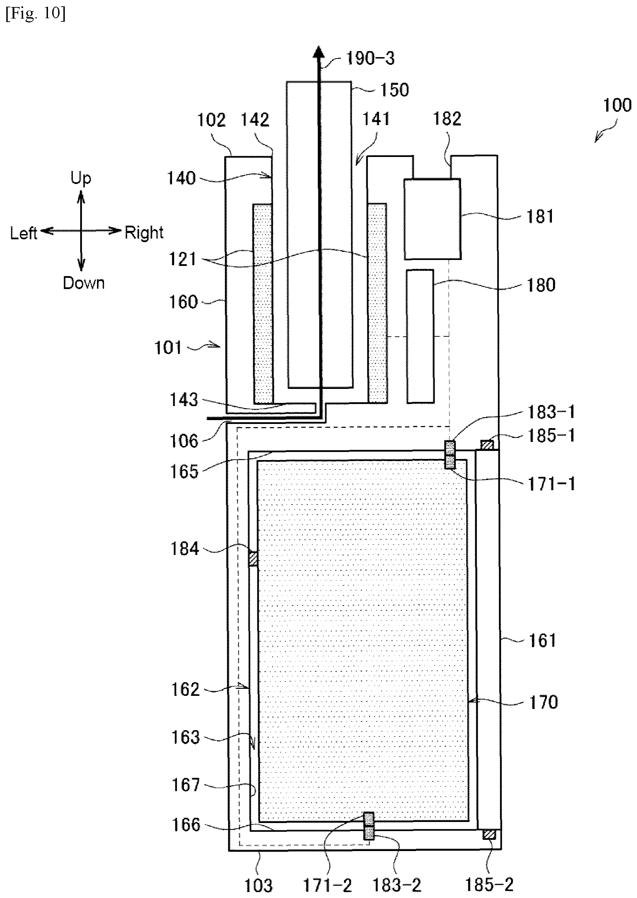

Fig. 10 is a diagram to illustrate another example of an air flow path in the inhalation device 100. The inhalation device 100 shown in fig. 10 is provided with a third through-hole 106, the two ends of which are formed by the bottom portion 143 of the accommodating portion 140 and a side face of the inhalation device 100. In the example shown in fig. 10, air flows along an air flow path 190-3 when the user takes a puff with the stick-type substrate 150 held in their mouth. That is to say, the air passes in succession through the third through-hole 106, the tip end of the stick-type substrate 150, then passes through the inside of the stick-type substrate 150, reaching the inside of the user's mouth together with the aerosol generated in the stick-type substrate 150.

### 5. Other

The inhalation device 100 is an example of an aerosol-generating system which generates an aerosol by heating an aerosol source. As described above, the battery pack 170 is configured to be removable from the inhalation device 100. The main body 101 of the inhalation device 100 excluding the battery pack 170 may be considered to be an aerosol-generating system, and the whole of the inhalation device 100 including the battery pack 170 may also be considered to be an aerosol-generating system. Furthermore, the combination of the inhalation device 100 and the stick-type substrate 150 may also be considered to be an aerosol-generating system.

The heating unit 121 described above is an example of a load for generating energy for heating the aerosol source contained in the stick-type substrate 150 accommodated in the accommodating portion 140. The load may be a resistive-heating heating unit 121, as described above. Alternatively, when the inhalation device 100 heats the aerosol source by means of induction heating, the electromagnetic induction source such as an induction coil corresponds to the load.

As described above, the direction of insertion/removal of the stick-type substrate 150 and the direction of insertion/removal of the battery pack 170 may be orthogonal, but the present disclosure is not limited to such an example. The direction of insertion/removal of the stick-type substrate 150 and the direction of insertion/removal of the battery pack 170 may also be substantially orthogonal.

In the example described above, the charging terminal 182 is provided on the top face 102 of the housing 160, but the present disclosure is not limited to such an example. The charging terminal 182 may equally be provided on a side face of the battery pack 170. For example, when heating unit 121 is provided on the left-hand side, the charging terminal 182 is preferably provided on the right-hand side face, which is the opposite side to the heating unit 121. This configuration also makes it possible to limit heat transfer from the heating unit 121 to the charging terminal 182.

In the example described above, the temperature sensor 184 is arranged on the left-side inner wall 167, but the present disclosure is not limited to such an example. For example, the temperature sensor 184 may equally be arranged on the inside of the cover portion 161, which is the inner wall of the battery compartment 162 on the side in the direction of removal of the battery pack 170. By virtue of this configuration, the temperature sensor 184 and the battery pack 170 come into contact only when the battery pack 170 is fully inserted and the cover portion 161 is closed. It is therefore possible to prevent friction between the temperature sensor 184 and the battery pack 170 as the battery pack 170 is inserted/removed, limiting misalignment and failure of the temperature sensor 184.

In the example described above, the battery compartment 162 defines a cuboid internal space 163, but the present disclosure is not limited to such an example. The inner wall of the internal space 163 does not necessarily have to be planar, and may equally be a curved surface.

It should be noted that the series of processes performed by each device described in the present description may be realized by using software, hardware, or any combination of software and hardware. Programs constituting the software are prestored on a recording medium (more specifically, a non-transitory computer-readable storage medium) provided internally or externally to each device, for example. When the programs are then executed, for example, by a computer for controlling each device described in the present description, the programs are read into a RAM and executed by means of a processing circuit such as a CPU. The recording medium is, for example, a magnetic disk, an optical disk, a magneto-optical disk, or a flash memory, etc. Furthermore, the computer programs may be distributed via a network, for example, without the use of a recording medium. Furthermore, the computer may be an application-specific integrated circuit such as ASIC, a general-purpose processor which executes functions by reading software programs, or a computer on a server used for cloud computing, etc. Furthermore, the series of processes performed by each device described in the present description may be processed centrally by a single computer, or may be processed in a distributed manner by multiple computers. In addition, in the embodiments described above, two or more communication means present in a single device may be physically realized by a single medium.

Furthermore, the processing described using flowcharts or sequence diagrams in the present description need not necessarily be implemented in the order depicted. Some processing steps may be implemented in parallel. Furthermore, additional processing steps may be employed and some processing steps may be omitted.

The following configurations also fall within the technical scope of the present disclosure.
(1) An aerosol-generating system comprising: a first accommodating portion accommodating a substrate containing an aerosol source;
   a load for generating energy for heating the aerosol source contained in the substrate accommodated in the first accommodating portion;
   a second accommodating portion accommodating a battery for supplying power to the load;
   a temperature sensor which is arranged in the second accommodating portion and measures a temperature of the battery accommodated in the second accommodating portion; and
   a control unit for controlling operation of the load based on the temperature detected by the temperature sensor, wherein
   the first accommodating portion has a first opening and insertably/removably accommodates the substrate in such a way that the substrate is inserted in a first direction and removed in a second direction through the first opening, the second accommodating portion has a second opening and insertably/removably accommodates the battery in such a way that the battery is inserted in a third direction and removed in a fourth direction through the second opening, and
   the temperature sensor is arranged on an inner wall of the second accommodating portion on the third direction side or the fourth direction side.
(2) The aerosol-generating system as disclosed in (1) above, wherein the temperature sensor is arranged in proximity to a part of a surface of the battery which is expected to reach the highest temperature during operation of the load.
(3) The aerosol-generating system as disclosed in (2) above, wherein the temperature sensor is arranged in proximity to the surface of the battery on a side which is closer to the load than the center of the battery.
(4) The aerosol-generating system as disclosed in any one of (1) to (3) above, wherein the control unit estimates the highest temperature of the battery based on the temperature detected by the temperature sensor, and controls operation of the load based on the estimated highest temperature of the battery.
(5) The aerosol-generating system as disclosed in (4) above, comprising a plurality of the temperature sensors, wherein the control unit controls operation of the load based on the highest temperature among the temperatures detected by the plurality of temperature sensors.
(6) The aerosol-generating system as disclosed in any one of (1) to (5) above, wherein the second accommodating portion further comprises a cover portion for opening/closing the second opening, and
   the cover portion opens/closes the second opening by being attached/detached or by pivoting.
(7) The aerosol-generating system as disclosed in (6) above, further comprising an opening/closing sensor for detecting opening/closing of the second opening by the cover portion,
   wherein the control unit controls operation of the load based on a detection result from the opening/closing sensor.
(8) The aerosol-generating system as disclosed in (7) above, wherein the control unit controls charging of the battery based on the detection result from the opening/closing sensor.
(9) The aerosol-generating system as disclosed in any one of (1) to (8) above, comprising a terminal electrically connected to the battery,
   wherein the control unit is arranged further to the second direction side than the second accommodating portion, and the terminal is arranged at a position on the inner wall of the second accommodating portion on the second direction side, offset from the load in the third direction or the fourth direction.
(10) The aerosol-generating system as disclosed in any one of (1) to (9) above, comprising a terminal electrically connected to the battery,
   wherein the terminal is configured as an elastic element.
(11) The aerosol-generating system is disclosed in any one of (1) to (10) above, further comprising:
   a first through-hole enabling communication between an internal space of the first accommodating portion and an internal space of the second accommodating portion; and
   a second through-hole enabling the internal space of the second accommodating portion to communicate with the outside.
(12) The aerosol-generating system as disclosed in any one of (1) to (11) above, further comprising a charging terminal for receiving power for charging the battery, supplied from an external power source, wherein the charging terminal is arranged further to the second direction side than the second accommodating portion.
(13) The aerosol-generating system as disclosed in any one of (1) to (12) above, wherein the first direction and the second direction, and the third direction and the fourth direction are orthogonal or substantially orthogonal.
(14) The aerosol-generating system as disclosed in any one of (1) to (11) above, further comprising the battery.
(15) The aerosol-generating system as disclosed in any one of (1) to (12) above, further comprising the substrate.

### REFERENCE SIGNS LIST

100 Inhalation device
101 Main body
102 Top face
103 Bottom face
104 First through-hole
105 Second through-hole
106 Third through-hole
107 Partition
111 Power source unit
112 Sensor unit
113 Notification unit
114 Memory unit
115 Communication unit
116 Control unit
121 Heating unit
140 Accommodating portion
141 Internal space
142 Opening
143 Bottom portion
150 Stick-type substrate
151 Substrate portion
152 Mouthpiece portion
160 Housing
161 Cover portion
162 Battery compartment
163 Internal space
164 Opening
165 Upper-side inner wall
166 Lower-side inner wall
167 Left-side inner wall
168 Hinge mechanism
170 Battery pack
171 Electrode
180 Control circuit
181 Charging circuit
182 Charging terminal
183 Battery terminal
184 Temperature sensor
185 Opening/closing sensor
190 Air flow path

## Claims

1. An aerosol-generating system comprising: a first accommodating portion accommodating a substrate containing an aerosol source;
a load for generating energy for heating the aerosol source contained in the substrate accommodated in the first accommodating portion;
a second accommodating portion accommodating a battery for supplying power to the load;
a temperature sensor which is arranged in the second accommodating portion and measures a temperature of the battery accommodated in the second accommodating portion; and
a control unit for controlling operation of the load based on the temperature detected by the temperature sensor,
wherein
the first accommodating portion has a first opening and insertably/removably accommodates the substrate in such a way that the substrate is inserted in a first direction and removed in a second direction through the first opening,
the second accommodating portion has a second opening and insertably/removably accommodates the battery in such a way that the battery is inserted in a third direction and removed in a fourth direction through the second opening, and
the temperature sensor is arranged on an inner wall of the second accommodating portion on the third direction side or the fourth direction side.

2. The aerosol-generating system as claimed in claim 1, wherein the temperature sensor is arranged in proximity to a part of a surface of the battery which is expected to reach the highest temperature during operation of the load.

3. The aerosol-generating system as claimed in claim 2, wherein the temperature sensor is arranged in proximity to the surface of the battery on a side which is closer to the load than the center of the battery.

4. The aerosol-generating system as claimed in any one of claims 1 to 3, wherein the control unit estimates the highest temperature of the battery based on the temperature detected by the temperature sensor, and controls operation of the load based on the estimated highest temperature of the battery.

5. The aerosol-generating system as claimed in claim 4, comprising a plurality of the temperature sensors,
wherein the control unit controls operation of the load based on the highest temperature among the temperatures detected by the plurality of temperature sensors.

6. The aerosol-generating system as claimed in any one of claims 1 to 5, wherein the second accommodating portion further comprises a cover portion for opening/closing the second opening, and
the cover portion opens/closes the second opening by being attached/detached or by pivoting.

7. The aerosol-generating system as claimed in claim 6, further comprising an opening/closing sensor for detecting opening/closing of the second opening by the cover portion,
wherein the control unit controls operation of the load based on a detection result from the opening/closing sensor.

8. The aerosol-generating system as claimed in claim 7, wherein the control unit controls charging of the battery based on the detection result from the opening/closing sensor.

9. The aerosol-generating system as claimed in any one of claims 1 to 8, comprising a terminal electrically connected to the battery,
wherein the control unit is arranged further to the second direction side than the second accommodating portion, and
the terminal is arranged at a position on the inner wall of the second accommodating portion on the second direction side, offset from the load in the third direction or the fourth direction.

10. The aerosol-generating system as claimed in any one of claims 1 to 9, comprising a terminal electrically connected to the battery,
wherein the terminal is configured as an elastic element.

11. The aerosol-generating system as claimed in any one of claims 1 to 10, further comprising:
a first through-hole enabling communication between an internal space of the first accommodating portion and an internal space of the second accommodating portion; and
a second through-hole enabling the internal space of the second accommodating portion to communicate with the outside.

12. The aerosol-generating system as claimed in any one of claims 1 to 11, further comprising
a charging terminal for receiving power for charging the battery, supplied from an external power source,
wherein the charging terminal is arranged further to the second direction side than the second accommodating portion.

13. The aerosol-generating system as claimed in any one of claims 1 to 12, wherein the first direction and the second direction, and the third direction and the fourth direction are orthogonal or substantially orthogonal.

14. The aerosol-generating system as claimed in any one of claims 1 to 11, further comprising the battery.

15. The aerosol-generating system as claimed in any one of claims 1 to 12, further comprising the substrate.
